# EUROPÄISCHE PATENTSCHRIFT

(11) **EP 1 640 265 B1**
(45) Veröffentlichungstag und Bekanntmachung des Hinweises auf die Patenterteilung: **20.02.2008**
(21) Anmeldenummer: 05020696.0
(22) Anmeldetag: 20.09.2005
(51) Int. Cl.: B64C 13/34, B64C 5/10

(54) **Vorrichtung zur Einstellung von Flugzeughöhenflossen**
Horizontal stabilizer trim device
Dispositif pour le réglage d'incidence d'un stabilisateur

(30) Priorität: 28.09.2004 DE 102004047008
(43) Veröffentlichungstag der Anmeldung: 29.03.2006
(73) Patentinhaber: Liebherr-Aerospace Lindenberg GmbH, 88161 Lindenberg/Allgäu (DE)
(72) Erfinder: Carl, Udo, Prof. Dr.-Ing., 21077 Hamburg (DE); Vötter, Axel, Dipl.-Ing., 21075 Hamburg (DE)
(74) Vertreter: Laufhütte, Dieter

(56) Entgegenhaltungen:
- EP-A- 1 557 353
- US-A- 3 143 693
- US-A1- 2001 042 811
- US-B1- 6 227 481

## Beschreibung

Die Erfindung betrifft eine Vorrichtung zur Einstellung von Flugzeughöhenflossen nach dem Oberbegriff des Anspruchs 1.

Höhenflossen heutiger Transportflugzeuge sind in ihrer Einstellung zur Flugzeugachse verstellbar. Durch diese Änderung des Höhenflossenanstellwinkels kann ein zusätzliches Moment um die Nickachse des Flugzeuges erzeugt werden, um Trimmzustände herzustellen oder die Wirkung der Höhenruder bei Manövern zu unterstützen.

Im Flugzeugbau sind sicherheitskritische Systeme, zu denen auch das Höhenflossenstellsystem THSA (englisch: Trimmable Horizontal Stabilizer Actuator) zählt, gegen einfache mechanische Fehler abzusichern. Aus diesem Grund werden alle lasttragenden Komponenten eines Höhenflossenstellsystems so gestaltet, dass von den Krafteinleitungspunkten von der Höhenflosse bis zur Anbindung an die Flugzeugstruktur mindestens zwei unabhängige mechanische Lastpfade entstehen (Fail Safe-Prinzip).

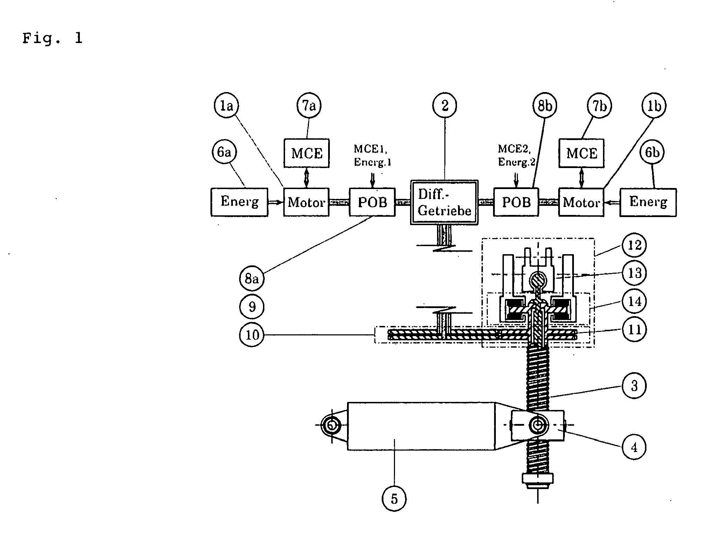

Anhand der Figur 1 wird beispielhaft die Fail-Safe Architektur eines konventionellen Flossensystems, wie es heutzutage bei Transportflugzeugen eingesetzt wird, dargestellt. Die mechanische Leistung wird in diesem System von zwei Antrieben bzw. Motoren 1 a und 1b über ein drehzahlsummierendes Differentialgetriebe 2 auf eine Spindel 3 geleitet, deren Spindelmutter 4 translatorisch verfährt und somit der drehbargelagerten Höhenflosse 5 eine Schwenkbewegung aufprägt. Ein solches System ist beispielsweise aus US 3,143,693 A bekannt.

Die Motoren 1 a und 1 b werden von zwei voneinander unabhängigen Energiesystemen 6a und 6b gespeist und von einer Regelungs- und Überwachungselektronik 7a und 7b (englisch: Motor Controll Electronic, MCE) angesteuert. Jeder Antrieb 1a und 1 b ist mit einer Bremse 8a und 8b (englisch: Power Off Brake, POB) versehen, deren Bremswirkung von einer vorgespannten Feder erzeugt wird. Über einen Betätigungsmechanismus, der seine Leistung aus dem Energiesystem des zugehörigen Antriebs 1 a und 1 b bezieht, wird die Feder auf Kommando der jeweiligen Überwachungselektronikeinheit 7a und 7b entspannt. Ist das Energiesystem 6a und 6b oder die Elektronik 7a und 7b aufgrund eines Fehlers nicht mehr verfügbar, wird die Bremse 8a und 8b automatisch gesetzt. Diese Verfahrensweise wird auch als Power-Off Prinzip bezeichnet. Das Differentialgetriebe 2 weist die geforderten zwei unabhängigen Lastpfade auf und ist derart gestaltet, dass stets eine halbe Summe der Drehzahlen beider Motoren 1 a und 1 b auf die Ausgangswelle 9 übertragen wird. Wird aufgrund eines aufgetretenen Fehlers ein Motor 1 a bzw. 1 b stillgesetzt und der entsprechende Getriebeeingang mit der zugehörigen Bremse 8a bzw. 8b blockiert, treibt der verbleibende intakte Antrieb 1a bzw. 1 b die Ausgangswelle 9 mit reduzierter Drehzahl weiter an. Über ein weiteres Getriebe 10 wird die Leistung auf die Spindel 3 übertragen.

In der Spindelkonstruktion integriert sind zwei unabhängige Lastpfade, von denen ein Primärlastpfad, der durch die eigentliche Funktionsspindel 3 gebildet wird, im fehlerfreien Betriebsfall die komplette Last trägt, während ein Sekundärlastpfad im fehlerfreien Betriebsfall unbelastet ist. Dieser sekundäre Lastpfad 11 ist im Inneren der hohl ausgeführten Spindel 3 als Zuganker 11 realisiert. Beim Bruch der Spindel 3 wird diese vom Zuganker 11 zusammengehalten, so daß über die zusammengehaltene Spindel 3 und die ebenfalls mechanisch dupliziert ausgeführte Spindelmutter 4 der Kraftschluss aufrechterhalten wird und die Höhenflosse 5 gegenüber der Struktur fixiert wird. Sowohl der Spindelkopf 12 des primären Lastpfades wie der sekundäre Lastpfad 11 innerhalb der Spindel 3 sind kardanisch an der Flugzeugstruktur aufgehängt. Der sekundäre Lastpfad 11 ist beispielsweise über ein Kugelgelenk 13 kardanisch aufgehängt. Ein sogenanntes "No-Back" 14 schützt das Stellsystem und damit die Flosse vor unkontrolliertem Weglaufen aus einer sicheren Halteposition unter der Wirkung aerodynamischer Kräfte an der Flosse im Fall eines einfachen mechanischen Fehlers (z. B. Bruch einer Antriebswelle zwischen den Antrieben 1 a und 1 b und dem Differentialgetriebe 2). Das "No-Back" 14 wirkt in diesem Fall wie eine autonome mechanische Feststellbremse.

Derartige Vorrichtungen zur Einstellung der Flugzeughöhenflossen, nach heutigem Stand der Technik, sind aus Sicherheitsgründen in allen mechanischen lasttragenden Baugruppen - vom Getriebe 2 und 10 über den Spindelkopf 12, die Spindel 3 mit sekundärem Lastpfad 11 und Motor 4 - mechanisch dupliziert ausgeführt. Dies bedingt eine sehr komplexe Fail Safe-Konstruktion, die nicht oder nur eingeschränkt auf Fehlerfreiheit beider Lastpfade (Vermeidung sogenannter "schlafender Fehler") testbar ist. Sowohl die "No-Back" Bremse 14 als auch der integrierte, sekundäre Lastpfad 11 lassen im eingebauten Zustand eine automatisierbare Testroutine nicht zu. Beim "No-Back" 14 ist es nicht möglich, die zur Prüfung der Funktion erforderlichen äußeren Lasten aufzubringen. In modernen Stellsystemen wird ein Sensorsystem implementiert sein, das eine Belastung des Zugankers nach Versagen des Primärlastpfades allerdings erst im Betrieb anzeigt. Die zuvor beschriebene konstruktive Komplexität und die nur sehr eingeschränkte oder gar nicht vollständig mögliche automatisierbare Testbarkeit des Systems am Boden sind die wesentlichen gravierenden Nachteile der Vorrichtung zur Einstellung der Flugzeughöhenflossen nach dem Stand der Technik.

Aufgabe der Erfindung ist es, die gattungsgemäße Vorrichtung zur Einstellung von Flugzeughöhenflossen im Verhältnis zur Flugzeugachse mit mechanischer Leistungsübertragung zwischen der Flugzeughöhenflosse und der Flugzeugstruktur derart weiterzubilden, dass mechanisch ein Fail Safe-System gewährleistet ist, und dass es erlaubt ist, alle lasttragenden Elemente der Konstruktion automatisiert, das heißt ohne spezielle Werkzeuge, Belastungssimulation oder ähnliches am Boden testen zu können.

Diese Aufgabe wird erfindungsgemäß durch die Kombination der Merkmale des Anspruchs 1 gelöst. Demnach wird eine Vorrichtung zur Einstellung von Flugzeughöhenflossen im Verhältnis zur Flugzeugachse mit mechanischer Leistungsübertragung von zwei Antrieben zur Höhenflosse geschaffen, bei dem zwei über eine Verbindungswelle gekoppelte Differentialgetriebe die Höhenflosse über mechanische Getriebemittel, wie je eine Spindel und eine Spindelmutter, antreiben. Demnach wird an Stelle eines in die Spindel integrierten Sekundärlastpfades, wie es entsprechend der vorgenannten Diskussion des Standes der Technik bis zum heutigen Tage üblich ist, eine Konstruktion mit zwei mechanisch getrennten Primärlastpfaden gebildet. Diese beiden getrennten Primärlastpfade bestehen aus jeweils mechanisch konstruktiv einfach ausgeführten Differentialgetrieben, Getriebeausgangswellen, Getrieben, Spindeln und Spindelmuttern bis zum Beschlag an der Höhenflosse.

Weitere bevorzugte Ausgestaltungen der Erfindung ergeben sich aus den sich an den Hauptanspruch anschließenden Unteransprüchen.

Demnach können die beiden Differentialgetriebe auch bei unterschiedlichen Drehzahlen der Antriebe eine selbsttätige Last- und Drehzahlsynchronisation der Spindeln bewirken.

Vorzugsweise weisen die Vorrichtungen jeweils nur einfach lasttragende Komponenten auf.

Besonders vorteilhaft ist ein Drehzahlsensor zur Ermittlung der Drehzahl der Verbindungswelle sowie eine Wellenbremse zum Abbremsen der Verbindungswelle vorhanden, die es erfindungsgemäß erlauben, Bruchfälle in einer mechanischen Komponente der leistungstragenden Lastpfade zu erkennen und das System im Fehlerfall sicher zu fixieren.

Weiterhin ist es vorteilhaft, dass jeweils auf den zwischen den Antrieben und den Differentialgetrieben angeordneten Antriebswellen Wellenbremsen und Sensoren angeordnet sind und dass zusätzlich Sensoren zur Drehzahlerkennung der Getriebeausgangswellen vorhanden sind. Über ebenfalls vorteilhaft vorhandene Regel- und Überwachungselektroniken zur Auswertung der Sensorsignal können mechanische Fehler sowie die Funktionsfähigkeit aller Bremsen durch automatisierbare Testroutinen festgestellt werden. Somit ist ein Integritätstest des gesamten Systems am Boden möglich.

Vorteilhaft können die Antriebe sowie Bremsen auf hydraulischer Leistungsversorgung, elektrischer Leistungsversorgung oder einer Kombination daraus beruhen.

Weitere Merkmale, Einzelheiten und Vorteile der Erfindung werden anhand eines in der Zeichnung dargestellten Ausführungsbeispiels erläutert. Es zeigen:
- Figur 1:: eine schematische Darstellung eines Höhenflossenstellsystems nach dem Stand der Technik,
- Figur 2:: eine schematische Darstellung der erfindungsgemäßen Vorrichtung gemäß einer ersten Ausführungsvariante,
- Figur 3:: eine schematische Darstellung des Leistungsflusses in der Vorrichtung gemäß Figur 2 und
- Figur 4:: eine dem Ausführungsbeispiel gemäß Figur 2 entsprechende Darstellung, in der die Sensorik der Vorrichtung eingezeichnet ist.

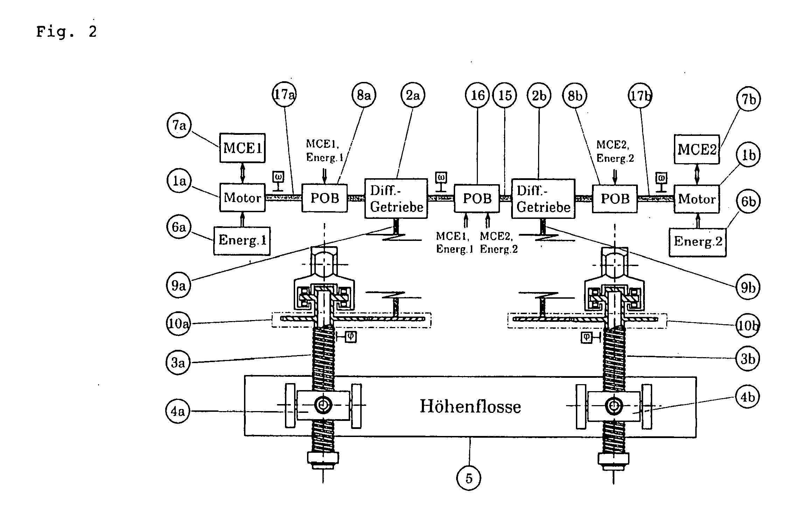

In der Ausführungsvariante gemäß Figur 2 sind diejenigen Teile, die in der Einrichtung gemäß dem Stand der Technik nach Figur 1 bereits enthalten waren, mit gleichen Bezugsziffern bezeichnet.

In der Ausführungsvariante gemäß Figur 2 sind zwei getrennte Lastpfade bestehend aus jeweils mechanisch konstruktiv einfach ausgeführten Differentialgetrieben 2a und 2b, Getriebeausgangswellen 9a und 9b, Getrieben 10a und 10b, Spindeln 3a und 3b und Spindelmuttern 4a und 4b bis zum Beschlag an der Höhenflosse 5 vorgesehen. Die mechanische Leistung wird durch zwei Antriebe bzw. Motoren 1 a und 1 b bereitgestellt, die von zwei voneinander unabhängigen Energiesystemen 6a und 6b gespeist werden und von einer Regelungs- und Überwachungselektronik 7a und 7b angesteuert werden.

Ein wesentliches Merkmal sind die zwei Differentialgetriebe 2a und 2b, die über eine Verbindungswelle 15 gekoppelt sind und im fehlerfreien Normalbetrieb die mechanische Leistung der Motoren 1 a und 1 b auf die jeweils zugeordneten Spindeln 3a und 3b übertragen. Die Verbindungswelle 15 ist mit einer sogenannten Power-Off Bremse 16 versehen, die von jeder der beiden ansteuernden Regelelektroniken 7a und 7b geöffnet werden kann. Bei Ausfall beider Energiesysteme 6a und 6b oder beider Regelelektroniken 7a und 7b wird die Bremse 16 über eine vorgespannte (hier nicht näher dargestellte) Feder betätigt.

Die Antriebswellen 17a und 17b verlaufen jeweils von den Motoren 1 a und 1b zu den Differentialgetrieben 2a und 2b. Beide Antriebswellen 17a und 17b sind mit sogenannten Power-Off Bremsen 8a und 8b versehen, die über das Energiesystem 6a und 6b versorgt und über die Elektronik 7a und 7b des zugehörigen Motors 1 a und 1b geschaltet werden. Über jeweils eine weitere Getriebestufe 10a und 10b wird die mechanische Leistung von der jeweiligen Getriebeausgangswelle 9a und 9b auf die Spindeln 3a und 3b übertragen.

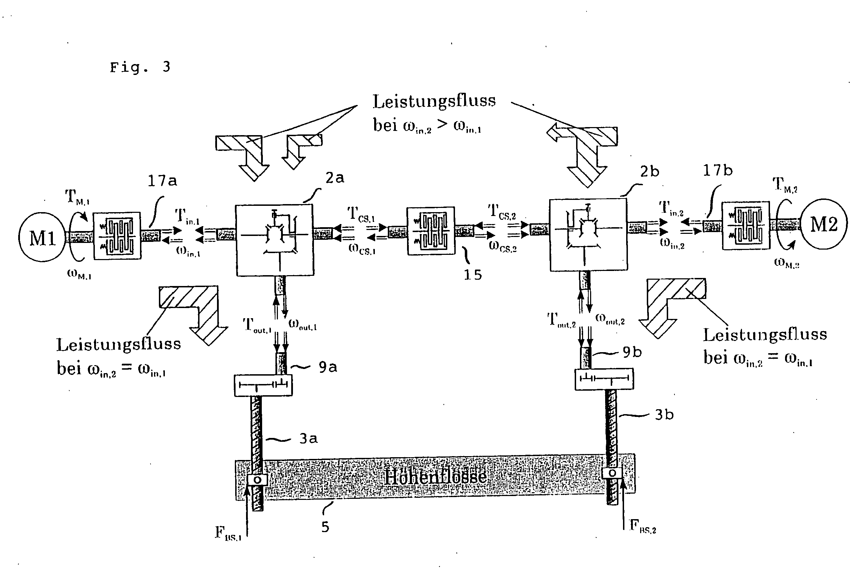

In Figur 3 sind die jeweiligen Leistungsflüsse im System gemäß der vorliegenden Erfindung gezeigt. Die im Bild schematisch dargestellten Differentialgetriebe 2a und 2b wirken drehzahlsummierend. Dadurch liegt Prinzip bedingt an der Getriebeausgangswelle 9a bzw. 9b, da die zur Spindel 3a bzw. 3b führt, stets die halbe Summe der Drehzahlen von Motorwelle ωᵢₙ und Verbindungswelle ω_{cs} an. Ebenfalls prinzipbedingt müssen die Motorwelle 17a bzw. 17b und die Verbindungswelle 15 gleichgroße Momente Tᵢₙ =T_{cs} führen, die sich beide an der Getriebeausgangswelle 9a bzw. 9b abstützen. Damit liegt an der Getriebeausgangswelle 9a bzw. ob ohne Berücksichtigung von Wirkungsgraden stets das doppelte Moment Tₒᵤₜ von Motor- und Verbindungswelle 15 an. Da beide Spindeln 3a und 3b an die starre Flugzeughöhenflosse 5 angebunden sind, müssen auch die Drehzahlen beider Getriebeausgangswellen ω_{out,1} = ω_{out,2} identisch sein. Unterschiedliche Drehzahlen der Motoren 1 a und 1 b werden daher über die Verbindungswelle 15 derart verteilt, dass an dem beide Getriebeausgangswellen 9a und 9b identische Drehzahlen anliegen. Im fehlerfreien Normalbetrieb synchronisiert sich das System der beiden Spindeln 3a und 3b daher kinematisch selbst. Sind beide Motordrehzahlen identisch, so steht die Verbindungswelle 15. Sind sie unterschiedlich, so treibt der schnellere Motor 1 a bzw. 1 b eine Drehzahldifferenz über sein zugeordnetes Differentialgetriebe 2a bzw. 2b und die Verbindungswelle 15 in das zweite Differentialgetriebe 2b bzw. 2a.

Die sich daraus ergebenden Leistungsflüsse sind im Bild 3 abgebildet. Bei identischen Eingangsdrehzahlen ω_{in,1} und ω_{in,2} steht die Verbindungswelle 15 still (ω_{cs} = 0), so daß der Leistungsfluss von der Motorwelle 17a bzw. 17b unverzweigt auf die Ausgangswelle 9a bzw. 9b geführt wird. Ist jedoch beispielsweise die Eingangsdrehzahl ω_{in,2} größer als ω_{in,1} wird durch die prinzipbedingten drehzahlsummierenden Eigenschaften der Differentialgetriebe 2a bzw. 2b, sowie der über die Flugzeughöhenflosse 5 gekoppelten und damit identischen Ausgangsdrehzahlen ω_{out,1} = ω_{out,2} ein Teil der Leistung von Motor 1b über die Verbindungswelle 15 und dem Differentialgetriebe 2a an die Getriebeausgangswelle 9a abgegeben. Da, wie bereits erwähnt, die Verbindungswelle 15 und die beiden Motorwellen 17a bzw. 17b prinzipbedingt gleichgroße Momente führen, die sich an den Getriebeausgangswellen 9a bzw. 9b abstützen, sind beide Spindeln 3a bzw. 3b stets gleich belastet. Damit sind in jedem Betriebszustand die Leistungsflüsse in die beiden Spindeln 3a bzw. 3b identisch.

Beide Motoren 1 a und 1b werden drehzahlgeregelt in einem überlagerten Positionsregelkreis betrieben. Sowohl zur Regelung der Motoren 1 a und 1 b, zur Positionierung der Flugzeughöhenflosse 5, als auch zur Überwachung von Bruch- und Klemmfällen des gesamten Stellsystems sind Winkel- und Drehzahlsensoren vorgesehen. Die Position der Flugzeughöhenflosse wird über Winkelsensoren 18a und 18b an den beiden Spindeln 3a und 3b geregelt und überwacht. Dieses Signal dient als Rückführung der Regelgröße für die Motoren 1 a und 1b im Positionsregelkreis. Die Drehzahlregelung der Motoren 1 a und 1 b benötigt die Signale der Drehzahl an die Motorwellen 19a und 19b und an der Verbindungswelle 20. Mit diesen Signalen kann das System geregelt verfahren und vollständig auf Bruch- und Klemmfälle überwacht werden.

Tritt an irgendeiner Stelle im Antriebsstrang ein Bruch auf, so kann an dieser Stelle keine Leistung übertragen werden. Da es sich an den Differentialgetrieben 2a und 2b alle Momente gegenseitige abstützen, wird die Wellendrehzahl ω_{cs} sprunghaft ansteigen. Dieser Drehzahlsprung wird von jeder der integrierten Überwachungselektroniken (7a, 7b) erkannt werden, die darauf hin das System still legt. Die Motoren 1a bzw. 1b werden beim Stilllegen abgeschaltet und die Bremsen 8a und 8b bremsen die Motorwellen 17a und 17b sowie die Bremse 16 bremst die Verbindungswelle 15.

Klemmfälle werden an einer beliebigen Stelle der lasttragenden Komponenten, beispielsweise den Differentialgetrieben 2a und 2b, den Getrieben 10a und 10b, den Spindeln 3a und 3b sowie den Spindelmuttern 4a und 4b bei vorgegebenen Stellraten des aktiven Antriebs sowohl im normalen Zweimotorbetrieb wie auch im Einmotorbetrieb auch anhand der Signalmuster von Positionssensoren in Verbindung mit Drehzahlsensoren 18a, 18b, 19a, 19b und 20 erkannt.

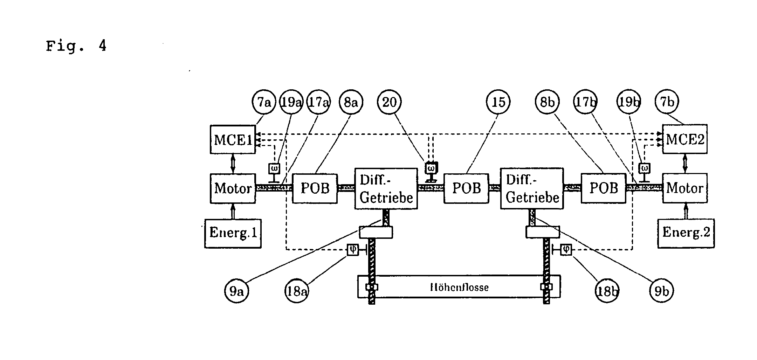

Die in Figur 4 dargestellte und erfindungsgemäße Anordnung von Bremsen und Sensoren erlaubt eine vollständige Überprüfung aller mechanischen Komponenten auf mechanische Fehler wie Bruch oder Klemmen in einem automatischen Test sowie der Bremsen selbst auf Funktionsfähigkeit unter Betriebslasten. Diese Überprüfbarkeit mittels automatisierter spezieller Testroutinen ist am Boden möglich.

Beispielsweise können Testroutinen wie folgt definiert werden:

Die Motorwelle 17a kann wie folgt auf Bruch überprüft werden: Der Motor 1 a ist angeschaltet, die Bremse 8a wird gesetzt. Der Drehzahlsensor 19a muß bei intakter Motorwelle 17a den Wert 0 annehmen.

Allgemein ein Bruchfall im gesamten Antriebsstrang der Motorwelle 17a, 17b, über das Differentialgetriebe 2a, 2b, über die Getriebeausgangswelle 9a, 9b, über das Getriebe 10a, 10b und die Spindel 3a, 3b zur Flugzeughöhenflosse 5 hin wird dadurch geprüft, dass beim Bremsen mittels der Bremsen 8a und 8b und der Bremse 16 auf der Verbindungswelle 15 das jeweilige Drehzahlsensorsignal auf der treibenden Motorseite für den Fall, dass die Motoren 1a oder 1b angetrieben werden, bei intaktem System 0 sind.

Für den Fall, dass ein Klemmfall an beliebiger Stelle in einem Antriebsstrang vom Differentialgetriebe 2a bzw. 2b, dem Getriebe 10a, 10b und den Spindeln 3a, 3b bzw. den Spindelmuttern 4a und 4b festgestellt werden soll, muß im Fall, dass eine Motorbremse 8a bzw. 8b eingreift und der ihr gegenüberliegende Motor 1 b bzw. 1 a antreibt, das Drehzahlsensorsignal des treibenden Motors 1b bzw. 1 a ungleich 0 sein.

## Patentansprüche

1. Vorrichtung zur Einstellung einer Höhenflosse (5) eines Flugzeugs im Verhältnis zur Flugzeugachse mit einem ersten Antrieb (1a), mit einem zweiten Antrieb (1b) und mit mechanischer Leistungsübertragung von dem ersten Antrieb (1a) und dem zweiten Antrieb (1b) zur Höhenflosse (5),
**dadurch gekennzeichnet,**
**daß** zwei über eine Verbindungswelle (15) gekoppelte Differentialgetriebe (2a, b), welche jeweils bezüglich der Drehzahlen des ersten Antriebs (1a) bzw. des zweiten Antriebs (1b) und der Verbindungswelle drehzahlsummierend wirken, über mechanische Getriebemittel, wie je eine Spindel (3a, b) und eine Spindelmutter (4a, b) die Höhenflosse antreiben und
**daß** die Verbindungswelle (15) mit einer Wellenbremse (16) versehen ist.

2. Vorrichtung nach Anspruch 1, **dadurch gekennzeichnet, daß** die Differentialgetriebe (2a, b) und die mechanischen Getriebemittel jeweils nur einfach lasttragende Komponenten enthalten.

3. Vorrichtung nach einem der vorhergehenden Ansprüche, **dadurch gekennzeichnet, daß** ein Drehzahlsensor (20) zur Ermittlung der Drehzahl der Verbindungswelle (15) sowie eine Wellenbremse (16) zum Abbremsen der Verbindungswelle (15) vorhanden sind.

4. Vorrichtung nach dem vorhergehenden Anspruch, **dadurch gekennzeichnet, daß** jeweils zwischen den Antrieben (1a,b) und den Differentialgetrieben (17a, b) angeordnete Antriebswellen (17a, b) vorhanden sind, auf denen Wellenbremsen (8a, b) und Sensoren (19a, b) angeordnet sind und daß zusätzlich Getriebeausgangswellen (9a,b) sowie Sensoren (18a,b) zur Drehzahlerkennung der Getriebeausgangswellen (9a,b) vorhanden sind.

5. Vorrichtung nach Anspruch 3 oder 4, **dadurch gekennzeichnet, daß** Regel- und Überwachungselektroniken (7a, b) zur Auswertung der Sensorsignale vorgesehen sind, die mechanische Fehler sowie die Funktionsfähigkeit aller Bremsen (8a, b und 16) durch automatisierbare Testroutinen feststellen können.

6. Vorrichtung nach einem der vorhergehenden Ansprüche, **dadurch gekennzeichnet, daß** Antriebe (1 a,b) sowie Bremsen (8a, b und 16) auf hydraulischer Leistungsversorgung, elektrischer Leistungsversorgung oder Kombinationen daraus beruhen.

## Claims

1. Apparatus for adjusting a tailplane (5) of an aircraft with respect to the aircraft axis, with a first drive (1a), with a second drive (1b) and with mechanical power transmission from the first drive (1a) and from the second drive (1b) to the tailplane (5),
**characterized**
**in that** two differential gear boxes (2a, b), which are coupled via a connecting shaft (15) and each result in rotation-speed addition with respect to the rotation speeds of the first drive (1a) and/or of the second drive (1b) and of the connecting shaft, drive the tailplane via mechanical transmission means, such as in each case one spindle (3a, b) and one spindle nut (4a, b) and in that the connecting shaft (15) is provided with a shaft brake (16).

2. Apparatus according to Claim 1, **characterized in that** the differential gear box (2a, b) and the mechanical transmission means each contain only components which are simply load-bearing.

3. Apparatus according to one of the preceding claims, **characterized in that** a rotation-speed sensor (20) is provided in order to determine the rotation speed of the connecting shaft (15), and a shaft brake (16) is provided in order to brake the connecting shaft (15).

4. Apparatus according to the preceding claim, **characterized in that** drive shafts (17a, b) are in each case arranged between the drives (1a, b) and the differential gear boxes (17a, b), on which drive shafts (17a, b) shaft brakes (8a, b) and sensors (19a, b) are arranged, and **in that** transmission output shafts (9a, b) as well as sensors (18a, b) for identifying the rotation speed of the transmission output shafts (9a, b) are additionally provided.

5. Apparatus according to Claim 3 or 4, **characterized in that** control and monitoring electronics (7a, b) are provided for evaluation of the sensor signals and can detect mechanical faults as well as the serviceability of all the brakes (8a, b and 16) by means of test routines which can be automated.

6. Apparatus according to one of the preceding claims, **characterized in that** drives (1a, b) as well as brakes (8a, b and 16) are based on hydraulic power supply, electrical power supply or combinations thereof.

## Revendications

1. Dispositif pour le réglage d'un plan horizontal (5) d'un avion par rapport à l'axe de l'avion, comportant un premier système d'entraînement (1a), un deuxième système d'entraînement (1b) et une transmission de puissance mécanique depuis le premier système d'entraînement (1a) et le deuxième système d'entraînement (1b) vers le plan horizontal (5),
**caractérisé**
- **en ce que** deux différentiels (2a, 2b), couplés par l'intermédiaire d'un arbre de transmission (15), agissent en tant qu'éléments sommateurs des vitesses, à savoir les vitesses de rotation du premier système d'entraînement (1a) ou du deuxième système d'entraînement (1b) et de l'arbre de transmission, et actionnent le plan horizontal (5) par l'intermédiaire de moyens d'engrenage mécaniques, tels qu'une broche (3a, b) et un écrou de broche (4a, b), et
- **en ce que** l'arbre de transmission (15) est muni d'un frein d'arbre (16).

2. Dispositif selon la revendication 1, **caractérisé en ce que** les différentiels (2a, b) et les moyens d'engrenage mécaniques comportent chacun seulement des composants porteurs de charge simples.

3. Dispositif selon l'une quelconque des revendications précédentes, **caractérisé en ce qu'**il est prévu un capteur de vitesse de rotation (20) destiné à déterminer la vitesse de rotation de l'arbre de transmission (15), ainsi qu'un frein d'arbre (16) destiné à freiner l'arbre de transmission (15).

4. Dispositif selon l'une quelconque des revendications précédentes, **caractérisé en ce qu'**il est prévu des arbres de commande (17a, b), qui sont montés respectivement entre les systèmes d'entraînement (1a, b) et les différentiels (2a, b) et sur lesquels sont disposés des freins d'arbre (8a, b) et des capteurs (19a, b), et **en ce qu'**il est prévu, en plus, des arbres de sortie de différentiel (9a, b), ainsi que des capteurs (18a, b) destinés à détecter la vitesse de rotation des arbres de sortie de différentiel (9a, b).

5. Dispositif selon la revendication 3 ou 4, **caractérisé en ce qu'**il est prévu des unités électroniques de réglage et de contrôle (7a, b), qui sont destinées à analyser les signaux des capteurs et qui, au moyen de routines de test automatisables, peuvent détecter des défaillances mécaniques, ainsi la capacité de fonctionnement de tous les freins (8a, b et 16).

6. Dispositif selon l'une quelconque des revendications précédentes, **caractérisé en ce que** les systèmes d'entraînement (1a, b), ainsi que les freins (8a, b et 16) sont basés sur une alimentation en puissance hydraulique, une alimentation en puissance électrique ou une combinaison des deux.
